# EUROPEAN PATENT SPECIFICATION

(11) **EP 3 182 744 B1**
(45) Date of publication and mention of the grant of the patent: **30.10.2019**
(21) Application number: 15832314.7
(22) Date of filing: 10.08.2015
(51) Int. Cl.: H04W 8/00, H04M 3/42, H04W 84/20

(54) **COMMUNICATION SYSTEM, COMMUNICATION METHOD, AND WIRELESS TERMINAL FOR WIRELESS COMMUNICATION NETWORK**
KOMMUNIKATIONSSYSTEM, KOMMUNIKATIONSVERFAHREN UND DRAHTLOSES ENDGERÄT FÜR EIN DRAHTLOSKOMMUNIKATIONSNETZWERK
SYSTÈME DE COMMUNICATION, PROCÉDÉ DE COMMUNICATION, ET TERMINAL SANS FIL POUR RÉSEAU DE COMMUNICATION SANS FIL

(30) Priority: 12.08.2014 JP 2014164033
(43) Date of publication of application: 21.06.2017
(73) Proprietor: NEC Corporation, Tokyo 108-8001 (JP)
(72) Inventor: YASUDA, Masato, Tokyo 108-8001 (JP); CHAKI, Prakash, Tokyo 108-8001 (JP); FUJITA, Norihito, Tokyo 108-8001 (JP)
(74) Representative: MacDougall, Alan John Shaw
(86) International application number: PCT/JP2015/004007
(87) International publication number: WO 2016/024400

(56) References cited:
- EP-A2- 2 323 460
- WO-A1-2013/177192
- JP-A- 2009 016 913
- JP-A- 2011 124 980
- JP-A- 2013 081 128
- JP-A- 2014 514 825
- US-A1- 2014 177 472
- US-A1- 2014 206 407
- US-A1- 2014 226 639

## Description

### [Technical Field]

The present invention relates to a wireless communication network including terminals that are capable of peer-to-peer (hereinafter, abbreviated as "P2P") wireless connection to each other (P2P terminals), and a communication technique in the same.

### [Background Art]

In recent years, Wi-Fi Direct has attracted attention as a terminal-to-terminal communication scheme in view of broader bandwidth, increased security, and the like. While conventional Wi-Fi networks work in the infrastructural mode with a specific device serving as an access point (AP), Wi-Fi Direct-compliant networks enable communication to be performed within a group, with any P2P terminal, not a specific device, serving as a group owner (NPL 1). A group owner is a P2P terminal that operates as an access point of a group and, as the parent of that group, can form the group including other P2P terminals as clients.

Within a P2P group formed as described above, terminals can share data and transfer data at high speed without connecting to the Internet or the like. Wi-Fi Direct, in particular, supports a robust security protocol and therefore can realize a higher level of security than the conventional ad-hoc mode (IBSS: Independent Basic Service Set and the like).

According to the above-described Wi-Fi Direct, when a group is formed between terminals, each P2P terminal first performs Device Discovery processing for searching for a P2P terminal in vicinity by alternately repeating Search state and Listen state. That is, in Search state, a P2P terminal sends out a search request (Probe Request) while sequentially changing predetermined channels (channels #1, #6, #11) and waits for a response thereto (Probe Response). In Listen state, a P2P terminal waits for Probe Request from another terminal and, if receiving Probe Request, returns a response, Probe Response, thereto. In this search processing, each terminal switches Search state and Listen state at random intervals, and therefore connection processing can be initiated between terminals if one of the terminals can send out Probe Request in Search state and the other can return a response, Probe Response, to this search request in Listen state on the same channel.

### [Citation List]

### [Non Patent Literature]

[NPL 1]
Wi-Fi Alliance Technical Committee PSP Task Group, Wi-Fi Peer-to-Peer (P2P) Technical Specification Version 1.1

US 2014/226639 discloses a method for performing Wi-Fi P2P communication and a device therefor. The method comprises the steps of: receiving a first beacon message from an owner of a Wi-Fi P2P group; and confirming a plurality of slots which are formed between a time when the first beacon message is received and a time when a next second beacon message is received, by using the first beacon message, wherein each slot of the plurality of the slots corresponds to one service type, and in one or more slots corresponding to interested services among the plurality of the slots, a Wi-Fi P2P device performs an operation for Wi-Fi P2P communication, and in one or more slots corresponding to uninterested services among the plurality of slots, the Wi-Fi P2P device stands by in a sleep mode.

EP 2 323 460 discloses a first station for communicating with a second station. The first station may include a storage unit configured to store relationship information defining a communication relationship between the first station and the second station. The first station may also include a communication unit configured to communicate with the second station and with an access point. The communication relationship may be maintained when the communication unit begins communicating with the access point.

### [Summary]

### [Technical Problem]

However, client terminals in a P2P group mutually perform communication by using a single channel within this group. Accordingly, if search processing cannot be performed on other channels than this channel for use, the group owner has no way of knowing a terminal or group that is present in the vicinity of this group.

Moreover, if terminals in a group can perform search processing on other channels than the channel for use, communication within the group cannot be performed while they are performing such search processing, and consequently communication performance within the group is lowered. Further, in search processing, switching between channels and switching between Search state and Listen state are performed as described above, and accordingly frequent execution of search processing by a client terminal hastens its battery consumption.

The present invention provides methods, a system, and wireless terminals as set out in the appended claims.

### [Solution to Problem]

### [Advantageous Effects of Invention]

According to the present invention, a searching terminal is designated, whereby it is possible to search for a neighboring terminal more efficiently within a group.

### [Brief Description of Drawings]

FIG. 1 is a network architecture diagram showing an example of a communication system according to a first exemplary embodiment of the present invention.
FIG. 2 is a block diagram showing the functional configuration of a wireless terminal according to the first exemplary embodiment.
FIG. 3 is a flowchart showing operation in a communication system according to a second exemplary embodiment of the present invention.
FIG. 4 is a sequence chart showing the operation in the communication system according to the second exemplary embodiment.
FIG. 5 is a schematic network architecture diagram for describing operation in a communication system according to a third exemplary embodiment of the present invention.
FIG. 6 is a block diagram showing the functional configuration of a wireless terminal according to the third exemplary embodiment.
FIG. 7 is a schematic network architecture diagram for describing the operation in the communication system according to the third exemplary embodiment.
FIG. 8 is a sequence chart showing an example of search operation by a searching terminal according to the third exemplary embodiment.
FIG. 9A is a flowchart showing an example of a method for designating a searching terminal in the communication system according to the third exemplary embodiment.
FIG. 9B is a flowchart showing another example of the method for designating a searching terminal in the communication system according to the third exemplary embodiment.
FIG. 10 is a schematic network architecture diagram for describing operation in a communication system according to a fourth exemplary embodiment of the present invention.
FIG. 11 is a flowchart showing an example of a method for scheduling search designation in the communication system according to the fourth exemplary embodiment.
FIG. 12 is a sequence chart showing the operation in the communication system according to the fourth exemplary embodiment.
FIG. 13 is a block diagram showing the functional configuration of a terminal according to an example of the present invention.
FIG. 14 is a flowchart showing cases of Wi-Fi Direct connection in the present example.
FIG. 15 is a schematic sequence chart showing operation of device discovery in the present example.
FIG. 16 is a schematic sequence chart showing operation of device discovery toward an existing group in the present example.
FIG. 17 is a schematic sequence chart showing operation of group owner negotiation between terminals in the present example.
FIG. 18 is a schematic sequence chart showing operation of connection to an existing group in the present example.
FIG. 19 is a schematic sequence chart showing operation of connection to a persistent GO in the present example.
FIG. 20A is a schematic sequence chart showing operation of client-led disconnection from a group in the present example.
FIG. 20B is a schematic sequence chart showing operation of group owner-led disconnection from a group in the present example.

### [Detailed Description]

### <Outline of embodiments>

According to exemplary embodiments of the present invention, one or a plurality of client terminals within a P2P group are designated, and the designated terminals are charged with a role for searching for other terminals. That is, the designated terminals search for terminals that are present in vicinity, and the other client terminals do not perform search operation. Not all client terminals but part of the client terminals are designated as searching terminals, whereby it is possible to suppress lowering of communication performance within a group, and to search for neighboring terminals more efficiently within the group. Further, terminals that perform search operation are limited, whereby it is possible to reduce power consumption in an entire group. Note that a designated searching terminal may disconnect from the group it belongs to and search channels (search all channels in the system or search a plurality of predetermined channels), or may search channels without disconnecting. Furthermore, a designated searching terminal may perform search operation not only when it is designated but also at designated time intervals or at predetermined period.

A searching terminal notifies information on another terminal it has discovered to the group owner, whereby the information on the other terminal can be shared within this group. If the searching terminal disconnects from the group it belongs to, the searching terminal reconnects to the original group and thereby can notify the information on the other terminal to the group owner.

Moreover, a searching terminal may be designated sequentially from among a plurality of client terminals that are selected beforehand. For example, a searching terminal is designated one by one from among the plurality of selected client terminals through a predetermined procedure taking fairness into account. Alternatively, the plurality of selected terminals are divided into two sub-groups, and a searching terminal may be designated in accordance with different time allocation and/or different procedures between the sub-groups. Hereinafter, the exemplary embodiments of the present invention will be described in more detail with reference to drawings.

### 1. First exemplary embodiment

According to a first exemplary embodiment of the present invention, an arbitrary or specified client terminal within a group is designated as a searching terminal, and only the designated searching terminal performs operation of searching for another terminal that is present in vicinity. The searching terminal notifies information on a discovered terminal to the group owner to which the searching terminal itself belongs.

### 1.1) System architecture and operation

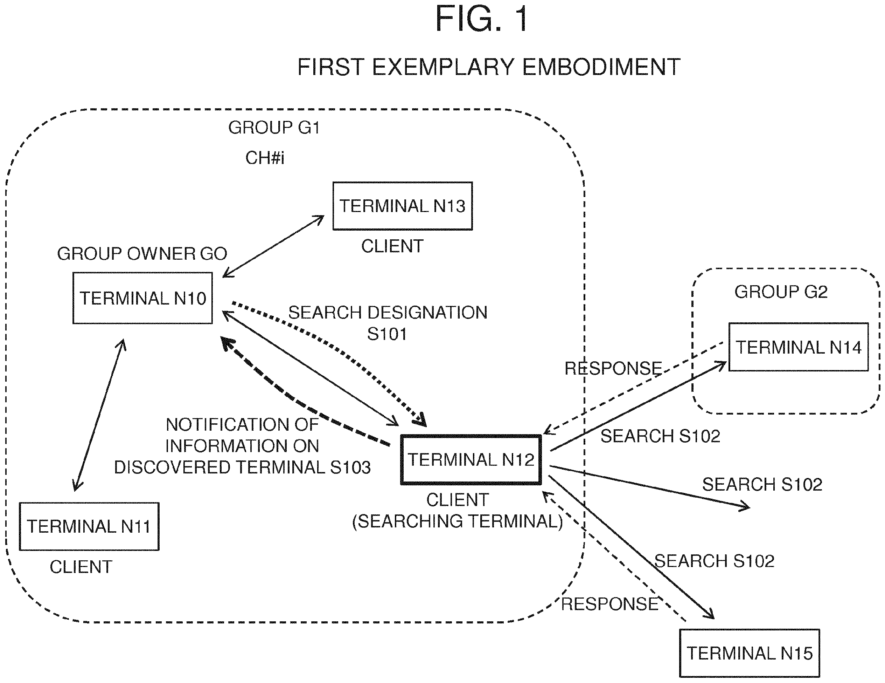

Referring to FIG. 1, it is assumed that a plurality of P2P terminals (here, four terminals N10 to N13) form a group G1, in which the parent (group owner) is the terminal N10 and clients are the terminals N11 to N13. Hereinafter, a case will be illustrated where the group owner terminal N10 designates one client terminal N12 as a searching terminal (Operation S101).

The terminal N12 as a searching terminal sends a search request on predetermined channels or all channels including channels other than an operating channel in the group G1 (Operation S102) and receives a response to this search request from another terminal, thereby discovering the presence of this other terminal. In search of all channels, it is possible to discover not only a terminal N14 that forms a group but also a terminal N15 that does not form any group. Only the searching terminal N12 performs this search operation, and the other client terminals N13 and N11 operate as ordinary clients without performing search of channels. In FIG. 1, it is assumed that responses are received from the terminal N14 that belongs to another group G2 and from the terminal N15 that does not form any group. Note that if a beacon is received from another group owner terminal, it is also possible to discover the presence of this other group.

The searching terminal N12 notifies information on the other terminals included in the received responses to the group owner terminal N10 (Operation S103). Thus, the group owner terminal N10 can acquire the information on the terminals or the group that is present in the vicinity of the group G1. Since the client terminals N11 and N13 other than the searching terminal N12 do not perform search operation, they can suppress battery consumption and also can perform communication within the group G1.

### 1.2) Terminal configuration

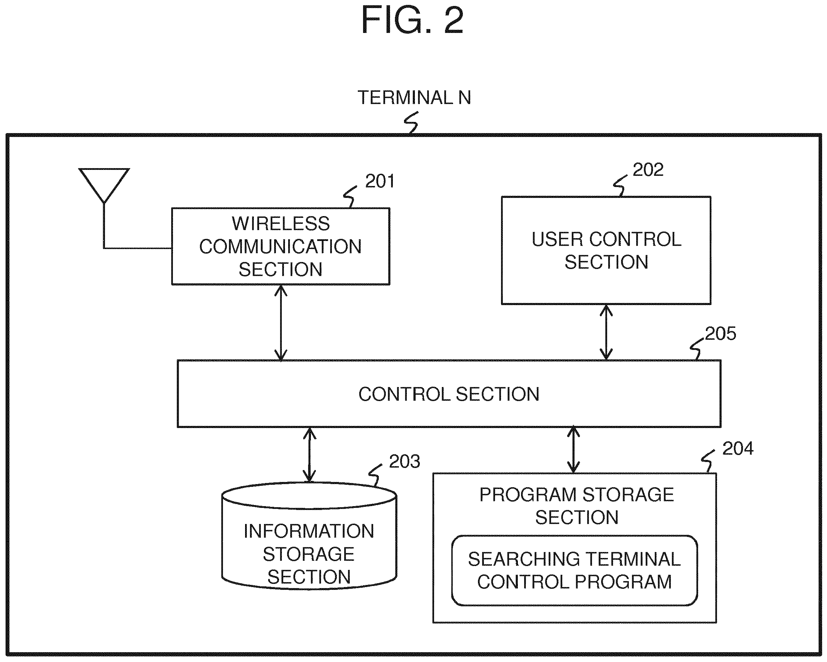

The terminals N10 to N15 shown in FIG. 1 basically have the same functional configuration. Hereinafter, the functional configuration of a terminal N that represents any of the terminals N10 to N15 will be described with reference to FIG. 2. Here, it is assumed that the terminals include wireless terminals having a function of configuring a P2P group, for example, mobile stations and communication terminals such as mobile information terminals and mobile telephone terminals equipped with this function.

Referring to FIG. 2, the terminal N includes a wireless communication section 201, a user control section 202, an information storage section 203, a program storage section 204, and a control section 205 for the terminal. The wireless communication section 201 is capable of P2P communication, which will be described later, and may be additionally capable of communicating with a radio base station of a mobile communication system or with a wireless LAN base station. Moreover, the wireless communication section 201 can detect the presence of another P2P group and the presence of another wireless LAN by scanning beacons broadcast from terminals that are present in vicinity.

The user control section 202 has a P2P automatic connection function that manages predetermined procedures for P2P terminal search, P2P group formation, joining, disconnection, and the like, and controls the wireless communication section 201 on behalf of a communication application. Note that similar control can be also performed by using a communication application. The information storage section 203 stores a message shared within a group to which the own terminal is connected, a message acquired from a searching terminal, history information in case of functioning as a searching terminal, or the like, which will be described later.

The program storage section 204 stores communication applications, searching terminal control programs, and the like in addition to programs for functioning as a terminal, and the control section 205 executes these programs and applications, thereby controlling operation as a P2P terminal, operation as a group owner or client, and operation as a searching terminal. In case the terminal is a group owner, the control section 205 performs control as a group owner and also performs, through a predetermined procedure, selection of a searching terminal, transmission of a search instruction signal to the searching terminal, acquisition of information on another terminal from the searching terminal, and storage thereof. In case the terminal is a client terminal serving as a searching terminal, the control section 205 performs control as a searching terminal and sequentially performs search for another terminal, acquisition of information from the other terminal, notification of the acquired information to the group owner, and the like.

### 1.3) Effects

As described above, according to the first exemplary embodiment of the present invention, one or some of the client terminals within a group are designated as searching terminals, and only the searching terminal(s) perform operation of searching for other terminals that are present in vicinity, whereby it is possible to maintain communication within the group by the other client terminals, and thus to suppress lowering of communication performance in the entire group. Further, since terminals that perform search operation are limited, it is possible to reduce power consumption in the entire group. Furthermore, the searching terminals notify information on discovered neighboring terminals to the group owner terminal, whereby the group owner can acquire information on the terminals in the vicinity of the group via the searching terminals.

### 2. Second exemplary embodiment

According to a second exemplary embodiment of the present invention, part of the client terminals in a group is designated as a searching terminal, whereby this searching terminal temporarily disconnects from the group and performs search operation, and thereafter reconnects and notifies information on another terminal discovered to the original group. A system architecture and the configuration of a terminal N according to the present exemplary embodiment are similar to those of the first exemplary embodiment shown in FIGS. 1 and 2, and therefore operation of the terminal and operation in the entire system according to the present exemplary embodiment will be described in detail hereinafter.

### 2.1) Operation of searching terminal

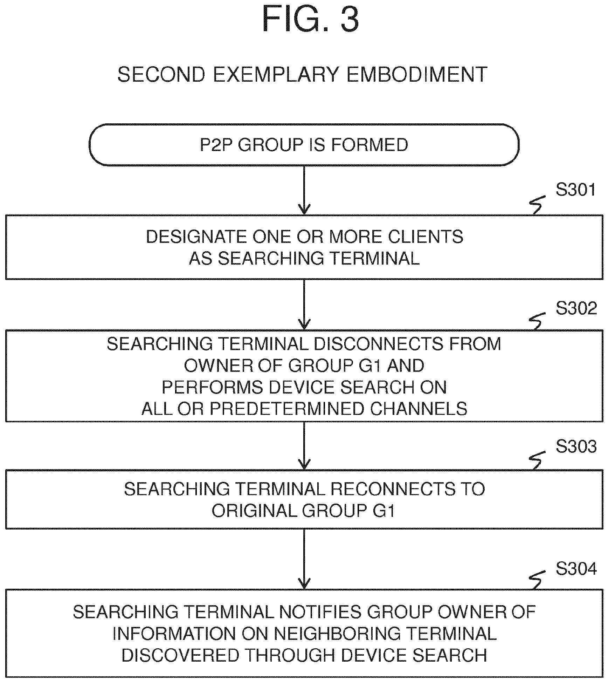

Referring to FIG. 3, after a P2P group G1 is formed, it is assumed that a group owner terminal N10 designates one or more clients as searching terminals (Operation S301).

The user control section 202 of each designated searching terminal, under control of the control section 205, disconnects the own terminal from the group owner terminal N10 through a predetermined procedure, and the searching terminal performs search of all channels (Operation S302). When acquiring information on a neighboring terminal through search operation, the user control section 202 reconnects the own terminal to the group owner terminal N10 via the wireless communication section 201 (Operation S303). Subsequently, the control section 205 notifies the acquired neighboring terminal information to the group owner terminal N10 via the wireless communication section 201 (Operation S304).

### 2.2) System operation

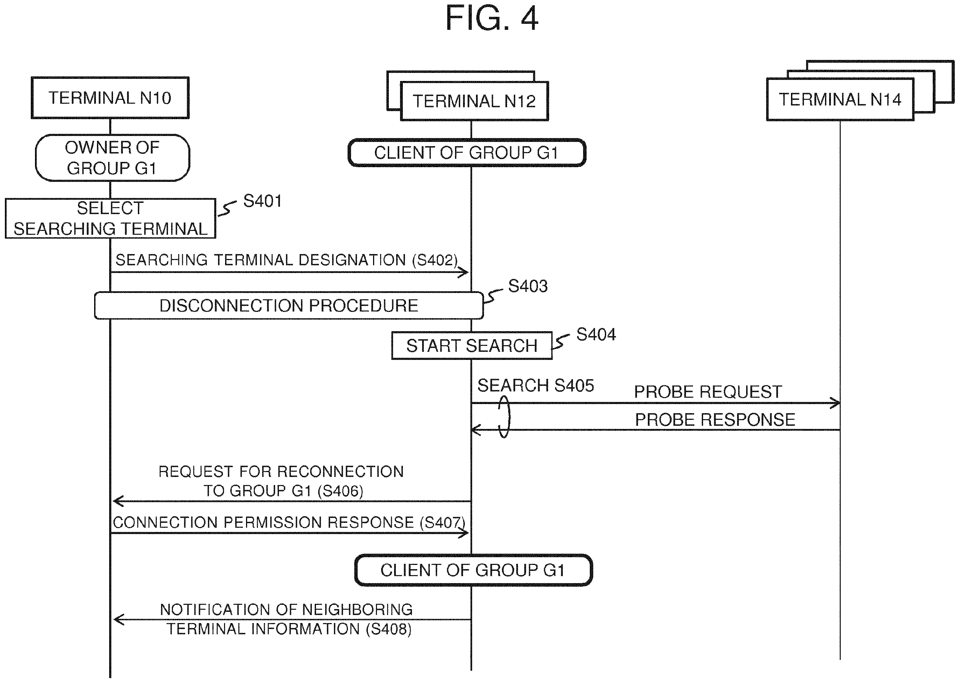

Referring to FIG. 4, the terminal N10 becomes the owner of the group G1, selects a searching terminal among the client terminals within the group G1 through a predetermined procedure (Operation S401), and sends a search instruction signal to the one client terminal N12 (Operation S402). When receiving this search instruction signal, the terminal N12 performs a procedure for disconnecting from the group owner terminal N10 (Operation S403) and, upon completing disconnection, starts searching a plurality of predetermined channels or searching all channels (Operation S404). In search of the channels, the searching terminal N12 sends a probe request while sequentially changing channels and waits for a response thereto (Operation S405). If receiving a probe response, the searching terminal N12 stores information on a terminal that is the source of the response.

When thus receiving the probe response from the terminal that is present in vicinity, the searching terminal N12 sends a request for reconnection to the group G1 to the group owner terminal N10 (Operation S406) and, if receiving a connection permission response from the group owner terminal N10 (Operation S407), makes reconnection as a client of this group G1. When becoming a client of the group G1, the searching terminal N12 notifies the group owner terminal N10 of the neighboring terminal information acquired through the search (Operation S408). The neighboring terminal information may be notified to the group members by UDP broadcast or the like, or may be notified by connecting to each member via a socket.

### 2.3) Effects

As described above, according to the second exemplary embodiment of the present invention, a searching terminal temporarily disconnects from a group and performs search operation, and thereafter reconnects to the original group and notifies information on another terminal. The searching terminal disconnects from the group and performs search, whereby the advantages can be obtained that the searching terminal can perform search operation sufficiently without any restrictions as a client terminal, and that search-related control performed by the group owner terminal is lightened.

### 3. Third exemplary embodiment

According to a third exemplary embodiment of the present invention, all or part of the client terminals within a group are sequentially designated as a searching terminal in a predetermined order, and only the searching terminal performs operation of searching for another terminal that is present in vicinity. As described above, a terminal that is performing search greatly consumes battery and cannot perform communication within the group during search. Accordingly, it is preferable that the order of designating a searching terminal be determined from the viewpoint of fairness, but it is also necessary to efficiently search the vicinity of the group with sufficient precision. Accordingly, in order to make it possible to ensure fairness and sufficiently search the vicinity, a round-robin scheme, a random scheme, or a designation scheme taking account of a terminal's surroundings, battery status, or the like, or a combination of any of these schemes can be used for a designation procedure in the present exemplary embodiment.

### 3.1) System architecture

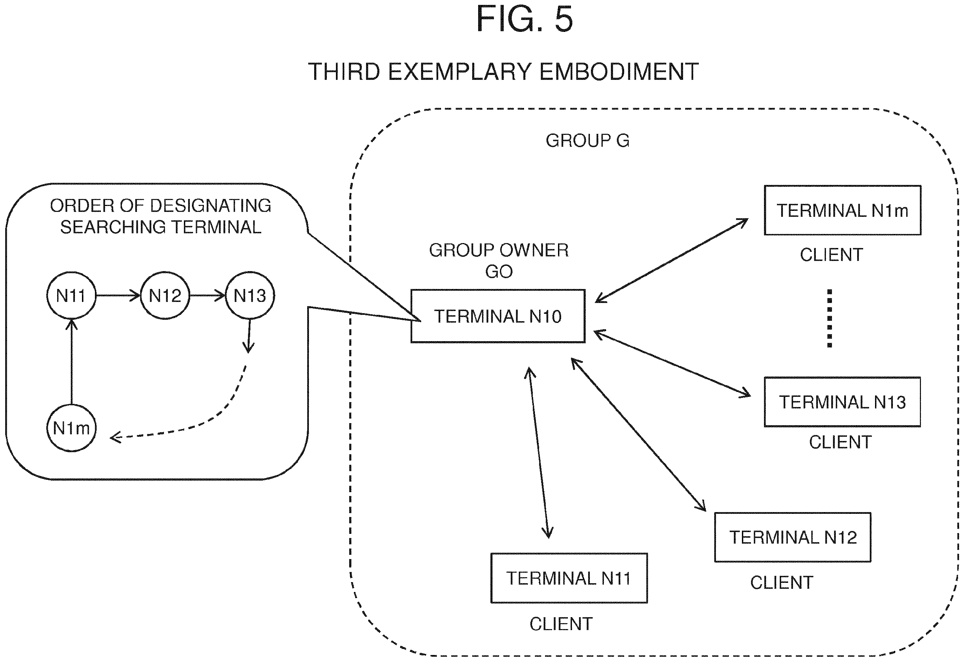

Referring to FIG. 5, it is assumed that a plurality of P2P terminals N10 to N1m form a group G, in which the group owner is the terminal N10 and clients are m (m is an integer not smaller than 1) terminals N11 to N1m. The group owner terminal N10 predetermines the order of designating a searching terminal as described above, but here it is assumed that the terminal N10 determines a searching terminal in the round-robin manner, like N11 -> N12 -> N13 -> ... -> N1m -> N11 -> ..., and sequentially sends a search instruction signal. A terminal N1s (s = 1, ... m) designated as a searching terminal performs operation of searching for another terminal that is present in vicinity and notifies information on a discovered terminal to the group owner terminal N10.

### 3.2) Terminal configuration

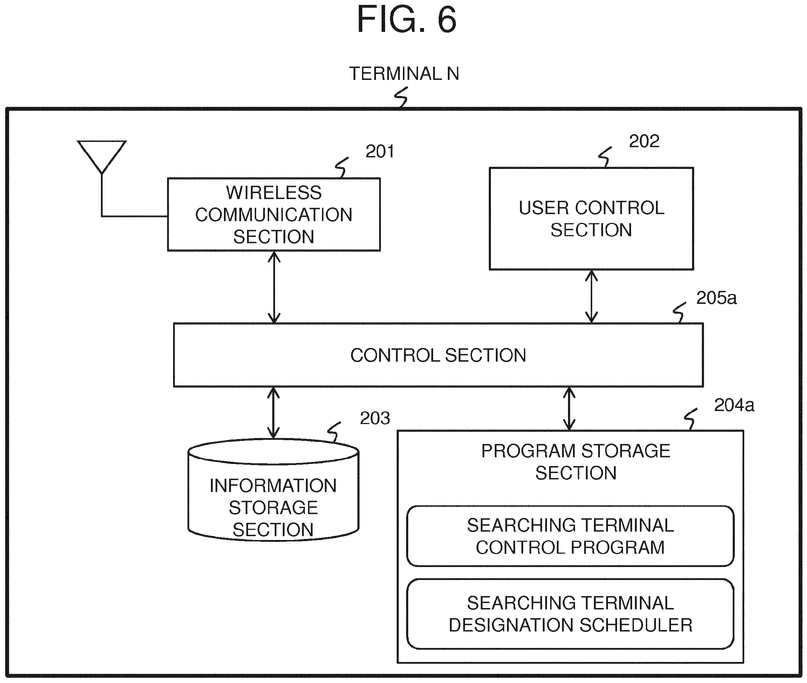

The terminals N10 to N1m shown in FIG. 5 basically have the same functional configuration. Hereinafter, the functional configuration of a terminal N that represents any of the terminals N10 to N1m will be described with reference to FIG. 6. Here, the terminals include wireless terminals having a function of configuring a P2P group, for example, mobile stations and communication terminals such as mobile information terminals and mobile telephone terminals having this function.

Referring to FIG. 6, the terminal N includes a wireless communication section 201, a user control section 202, an information storage section 203, a program storage section 204a, and a control section 205a for the terminal. The wireless communication section 201, user control section 202, and information storage section 203 are as described in the first exemplary embodiment, and therefore a detailed description thereof will be omitted.

The program storage section 204a stores programs for functioning as a terminal, searching terminal control programs for controlling operation as a P2P terminal, operation as a group owner or client, and operation as a searching terminal, and searching terminal designation scheduler programs for determining the order in which the terminal serving as a group owner designates a searching terminal.

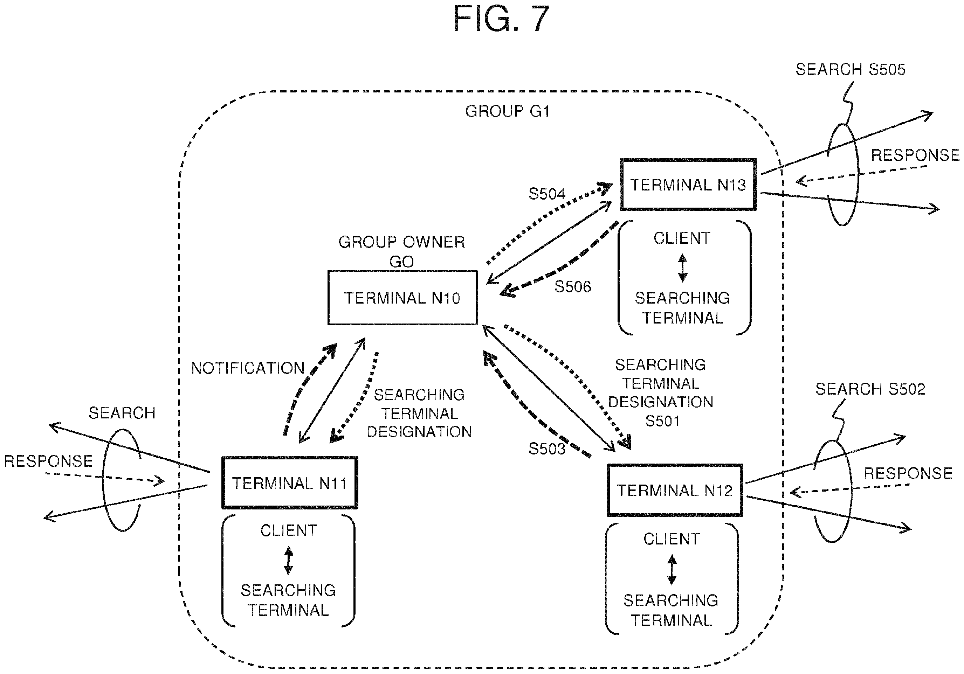

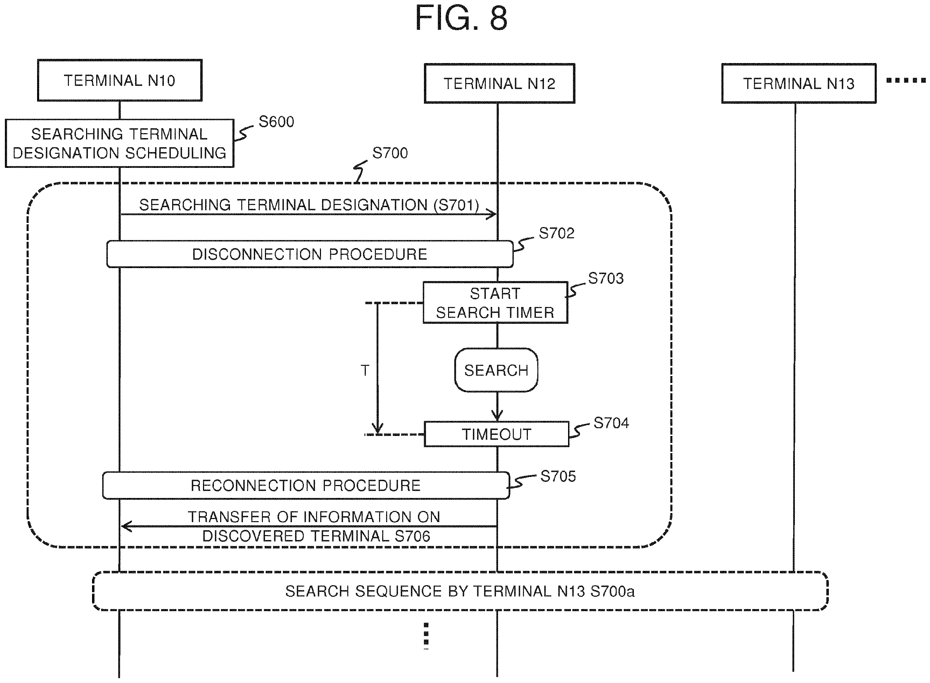

The control section 205a for the terminal serving as a group owner performs control as a group owner and also executes a searching terminal designation scheduler, thus sequentially sending a search instruction signal to a client terminal, acquiring information on another terminal from the searching terminal, and storing it in accordance with the predetermined designation procedure. The control section 205a for a client serving as a searching terminal performs control as a searching terminal and also sequentially performs search for another terminal, acquisition of information from the other terminal, notification of the acquired information to the group owner, and the like. Hereinafter, operation of a group owner terminal and of a searching terminal will be described with reference to FIGS. 7 and 8.

### 3.3) System operation

Referring to FIG. 7, it is assumed that the terminals N10 to N13 form a group G1, in which the group owner is the terminal N10 and clients are the terminals N11 to N13. It is assumed that the group owner terminal N10 sequentially determines a searching terminal in the round-robin manner, in the designation order of N12 -> N13 -> N11 -> N12 -> ...

First, the group owner terminal N10 gives a searching terminal designation only to the client terminal N12 (Operation S501), and the terminal N12, in response thereto, starts searching channels as a searching terminal (Operation S502). If receiving a response to this search from another terminal, the terminal N12 notifies information on this other terminal to the group owner terminal N10 (Operation S503) and returns to the original client terminal from the searching terminal.

The group owner terminal N10 that has received the other terminal information from the terminal N12 designated for search, subsequently gives a searching terminal designation only to the client terminal N13 (Operation S504), and the terminal N13, in response thereto, starts searching channels as a searching terminal (Operation S505). If receiving a response to this search from another terminal, the terminal N13 notifies information on this other terminal to the group owner terminal N10 (Operation S506) and returns to the original client terminal from the searching terminal. With respect to the terminal N11 as well, searching terminal designation, search, and notification are sequentially performed similarly. Thereafter, the client terminals are sequentially designated as a searching terminal in the round-robin manner and perform similar operation.

### 3.4) Search sequence

Next, a description will be given of an example of a search sequence by a terminal designated as a searching terminal, with reference to FIG. 8. Referring to FIG. 8, the group owner terminal N10 performs scheduling for designating a searching terminal (Operation S600), and a searching terminal, which is sequentially designated based on the scheduling, sequentially performs a search sequence S700/S700a/... The search sequences S700, S700a, ... are the same in its basic operation, only with the difference that they are performed by different terminals, and therefore the search sequence S700 will be described.

In the search sequence S700 by the terminal N12, first, the group owner terminal N10 designates the client terminal N12 as a searching terminal (Operation S701), and the terminal N12, in response thereto, performs a procedure for disconnecting from the group owner terminal N10 (Operation S702). The searching terminal N12 starts a timer on which a predetermined search time T is set (Operation S703) and performs search without returning to the group G1 until timeout occurs.

When timeout of the timer occurs (Operation S704), the searching terminal N12 reconnects to the group owner terminal N10 and returns to the original group G1 (Operation S705). The reconnected terminal N12 transfers information on another terminal discovered through the search to the group owner terminal N10 (Operation S706), and the group owner terminal N10 stores the other terminal information in the information storage section 203.

Timer setting as described above makes it possible to cause a searching terminal to perform search for a certain period of time and also certainly return to its original group. Note that the group owner terminal N10 can also perform control such that timer setting on a searching terminal is not made. Alternatively, it is also possible that the control section 205a of a searching terminal determines whether or not to set a return timer on its own station.

Moreover, the search operation of a searching terminal is managed by using a timer in the present exemplary embodiment, but also can be managed by additionally using the number of neighboring terminals to be discovered. For example, it is also possible that the number of neighboring terminals is designated, and a searching terminal returns after it has discovered the designated number of neighboring terminals or after the predetermined search time T has passed.

### 3.5) Order of designating a searching terminal

The group owner terminal N10 can use the above-described round-robin scheme for a way of designating a plurality of client terminals. However, various modes are conceivable for the order of designating a plurality of client terminals.

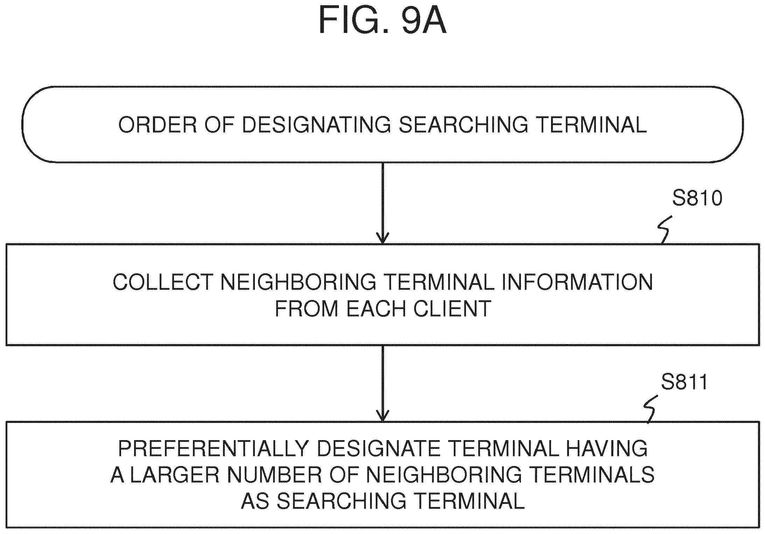

As illustrated in FIG. 9A, it is possible that the group owner terminal N10 collects neighboring group information or neighboring terminal information from each of the plurality of client terminals (Operation S810) and preferentially designates a client terminal that has a larger number of neighboring groups/neighboring terminals as a searching terminal (Operation S811). Alternatively, it is also possible that the client terminals are sequentially designated in the round-robin manner in descending order of the number of neighboring groups/neighboring terminals.

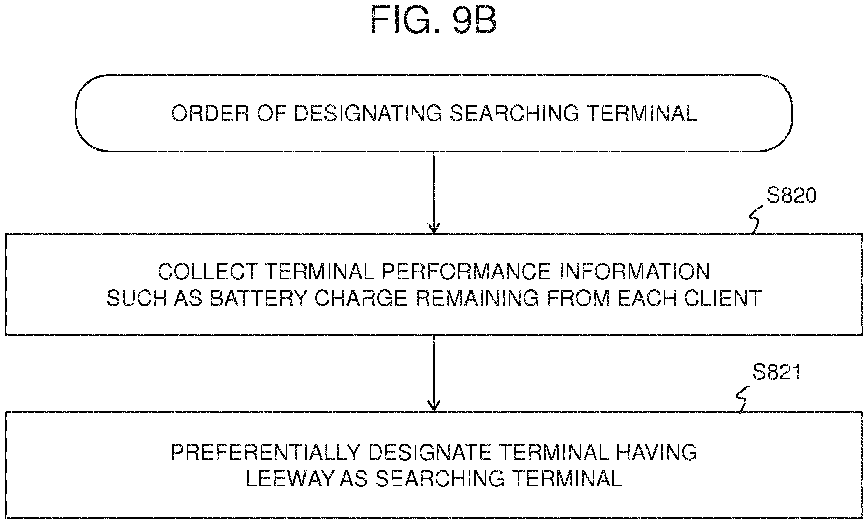

As illustrated in FIG. 9B, it is possible that the group owner terminal N10 collects terminal performance information such as throughput or battery charge remaining from each of the plurality of client terminals (Operation S820) and preferentially designates a client terminal that has enough throughput, battery charge remaining, or the like for performing search operation as a searching terminal (Operation S821). Alternatively, it is also possible that client terminals that have enough throughput, battery charge remaining, or the like are sequentially designated as a searching terminal in the round-robin manner.

Moreover, if each client terminal has a location detection function and the group owner terminal N10 can acquire the location information of each client terminal, it is also possible that the group owner terminal N10 stores an area where a large number of terminals were discovered through past search as history information, and preferentially designates a client terminal that is in the same area or is close thereto as a searching terminal. Further, it is also possible that the clients are sequentially designated based on the distance from the group owner terminal N10, that is, starting from the most distant client from the group owner. Furthermore, it is also possible that the client terminals are sequentially designated as a searching terminal in the order of old connection to the group G1, or in the order of new connection to the group G1, by using a timestamp that indicates a time point when a client terminal joined.

As described above, the order of designating a searching terminal can be also determined based on throughput, battery charge remaining, the number of neighboring groups/neighboring terminals, distance from the group owner, or timestamp indicating a time point when a client terminal joined, or a combination of any of these items. Moreover, as the simplest method, any of all of the plurality client terminals may be selected at random as a searching terminal.

### 3.6) Timing of designating a searching terminal

The group owner terminal N10 can be triggered to designate a searching terminal, for example, by a condition as listed below.
- When a client terminal discovers a new neighboring terminal or neighboring group
- When timeout of a timer for measuring a certain period of time occurs (periodical designation)
- When a client terminal that has returned as a searching terminal finishes notifying information on another terminal

### 3.7) Effects

As described above, according to the third exemplary embodiment of the present invention, part of the plurality of client terminals within a group are sequentially designated as a searching terminal through a predetermined procedure, and only the designated searching terminal performs operation of searching for another terminal that is present in vicinity, whereby it is possible to secure battery consumption and fairness with respect to communication within the group. Moreover, the procedure of designating a searching terminal is determined based on information about each client terminal's status, surroundings, or the like, allowing more efficient search.

### 4. Fourth exemplary embodiment

According to a fourth exemplary embodiment of the present invention, one or more client terminals are selected beforehand as specific terminals within a group, and the selected specific terminals are sequentially designated as a searching terminal. For example, a terminal that has an advantage in search operation such as having many neighboring terminals, or a terminal that has more than enough terminal performance such as throughput, battery capacity, or battery charge remaining is selected as a specific terminal. Thereby, it is possible to designate the selected specific terminals as main searching terminals, and thus to perform search scheduling taking account of fairness with the other terminals than the specific terminals.

Moreover, it is also possible that the clients within a group are divided into a plurality of sub-groups in accordance with a fixed criterion such as having an advantageous condition in search operation or having more than enough terminal performance such as throughput or battery charge remaining, and a searching terminal is designated in accordance with different time allocation and/or different designation procedures between the sub-groups. Hereinafter, the fourth exemplary embodiment will be described in detail by taking a case of two sub-groups, one consisting of specific terminals and the other consisting of other terminals, as an example.

### 4.1) System architecture

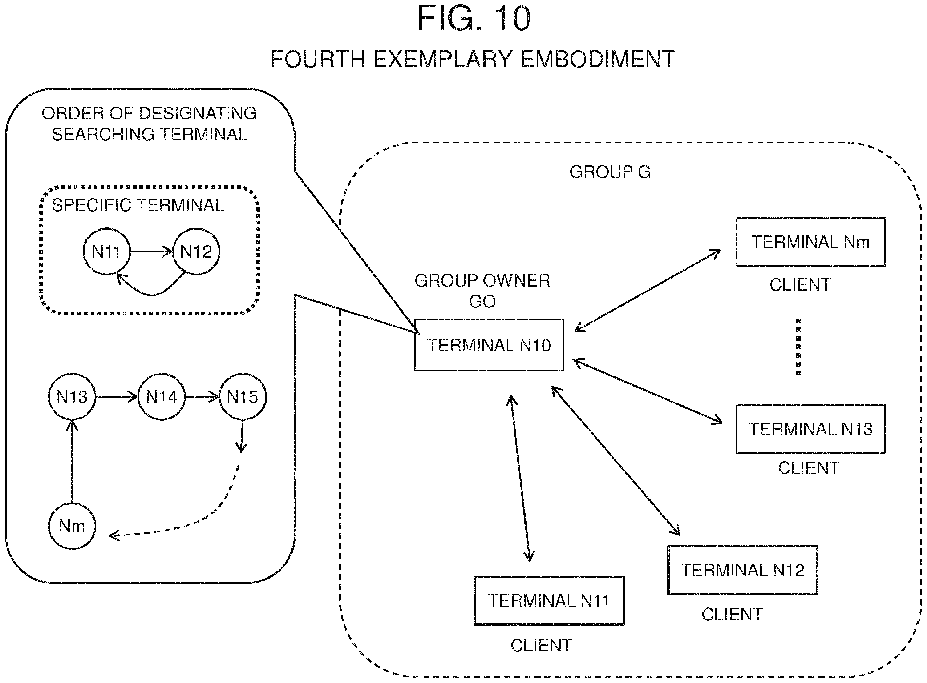

Referring to FIG. 10, in a system according to the present exemplary embodiment, it is assumed that a plurality of P2P terminals N10 to N1m form a group G, in which the group owner is the terminal N10 and clients are m (m is an integer not smaller than 1) terminals N11 to N1m. It is assumed that the group owner terminal N10 selects the client terminals N11 and N12 as specific terminals beforehand and predetermines the order of designating a searching terminal as described already. Here, it is assumed that a searching terminal is designated in the round-robin manner like N11 -> N12 -> N11 -> N12 -> ...

Further, according to the present exemplary embodiment, it is assumed that the plurality of client terminals are divided into a first sub-group consisting of the specific terminals N11 and N12 and a second sub-group consisting of the other client terminals N13 to N1m, and that a searching terminal is designated in the round-robin manner also in the second sub-group. However, time periods of search allocated to the first and second sub-groups are different.

A terminal N1s (s = 1, ... m) designated as a searching terminal performs operation of searching for another terminal that is present in vicinity and notifies information on a discovered terminal to the group owner terminal N10, as described above.

### 4.2) Search designation scheduling control

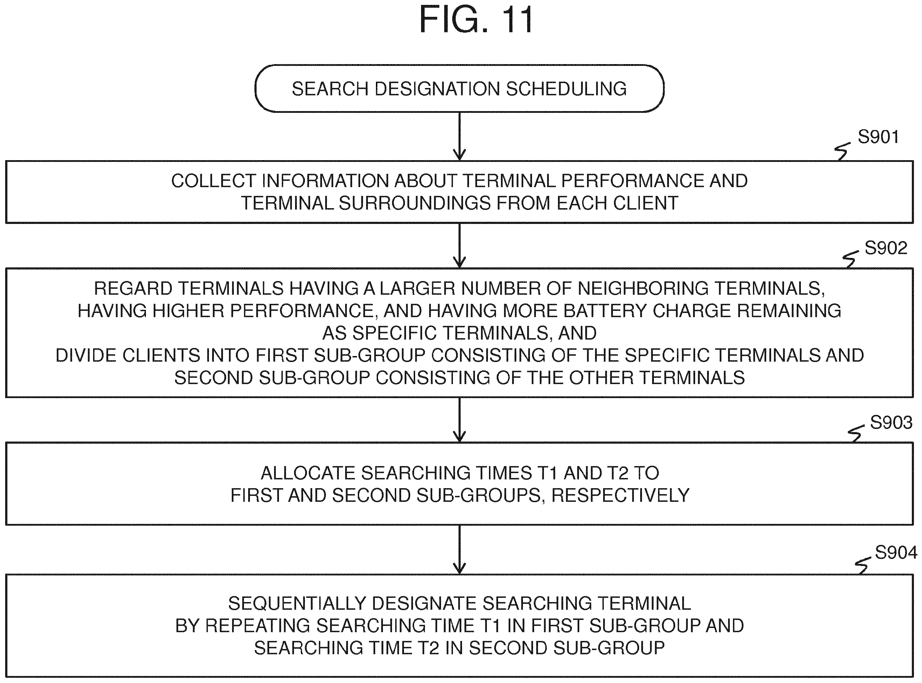

Referring to FIG. 11, the group owner terminal N10 collects from each of the plurality of client terminals information about the status, terminal performance, surroundings, and the like of the client terminal (Operation S901). The group owner terminal N10 selects a terminal that has a larger number of neighboring groups/neighboring terminals than a predetermined value, a terminal that has higher terminal performance than a predetermined value, and/or a terminal that has more battery charge remaining than a predetermined value as a specific terminal, and distinguishes between the first sub-group consisting of the specific terminals and the second sub-group consisting of the other client terminals than the specific terminals (Operation S902).

Subsequently, the group owner terminal N10 allocates different search times T1 and T2 to the first sub-group consisting of the specific terminals and the second sub-group consisting of the other terminals than the specific terminals, respectively (Operation S903). The ratio between the search times T1 and T2 may be determined based on a condition or conditions such as the number of the specific terminals and battery charge remaining. For example, if the specific terminals in the first sub-group have leeway of battery charge remaining and the number of the specific terminals is larger than a predetermined number, then the search time T1 is set longer than T2, but if the number of the specific terminals is smaller than the predetermined number, then the search time T1 is set shorter than that in the case the number of the specific terminals is larger than the predetermined number, and the search time T2 is made longer relatively.

When allocating the search times T1 and T2, the group owner terminal N10 sequentially designates a searching terminal by repeating search designation in the first sub-group and search designation in the second sub-group according to the search times T1 and T2, respectively (Operation S904).

Note that search designation scheduling is not limited to the above-described example, but the order of designating a searching terminal described in the third exemplary embodiment and the like can be applied. Moreover, it is also possible to divide into three or more sub-groups and designate a searching terminal in accordance with different time allocation and/or different designation procedures among the sub-groups.

### 4.3) Operation

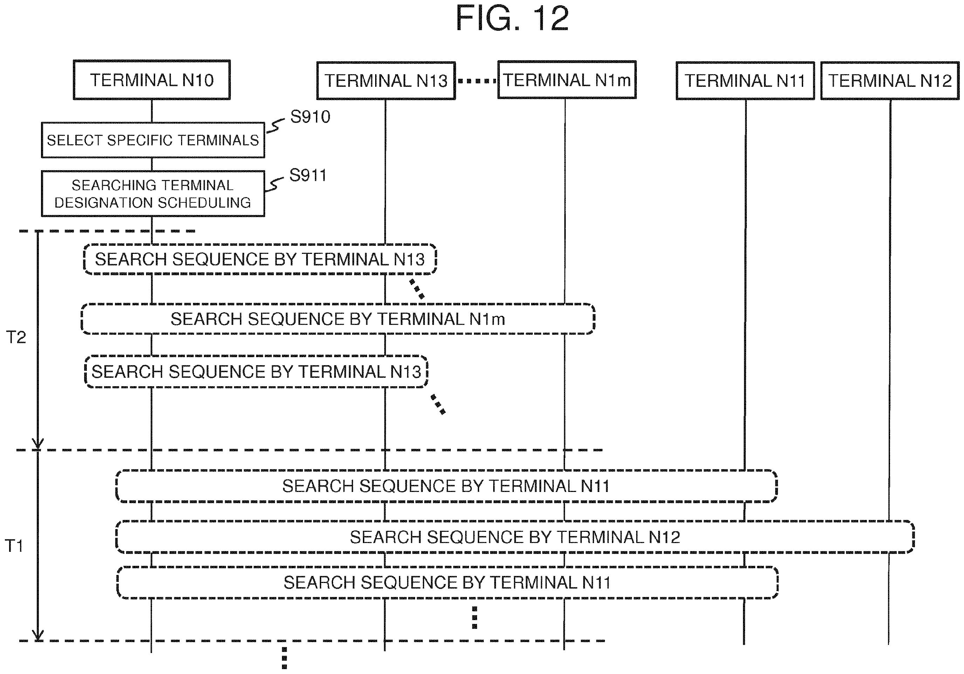

Referring to FIG. 12, the group owner terminal N10, after selecting the specific terminals (Operation S910), determines the search times T1 and T2 and the respective designation procedures in the sub-groups based on the above-described search designation scheduling (Operation S911). Thereafter, in each of the first and second sub-groups, a designated searching terminal sequentially performs a search sequence in accordance with the respective search times T1 and T2 and designation procedures. That is, during the search time T2, the terminals N13 to N1m in the second sub-group are sequentially designated as a searching terminal, for example, in the round-robin manner, and during the search time T1 after the search time T2 has passed, the terminals N11 and N12 in the first sub-group are alternately designated as a searching terminal. Note that the search sequence by each searching terminal is similar to the search sequence S700 shown in FIG. 8, and therefore a description thereof will be omitted.

### 4.4) Effects

As described above, according to the fourth exemplary embodiment of the present invention, in addition to the effects of the above-described first to third exemplary embodiments, it is possible to select as a specific terminal, for example, a terminal that has an advantage in search operation such as having many neighboring terminals, a terminal that has leeway of battery capacity or battery charge remaining, or the like, and to designate this specific terminal as a main searching terminal. Thereby, efficient search is possible, and search scheduling taking account of fairness with the other terminals than the specific terminal is also possible.

### 5. Example

Next, a detailed description will be given of a case as an example of the present invention where the above-described systems according to the first to fourth exemplary embodiments of the present invention are applied to a Wi-Fi Direct-compliant P2P network. Since basic configurational components and functions are as described above, illustrated below is a case where such configurational components and functions are implemented based on Wi-Fi Direct.

### 5.1) Terminal configuration

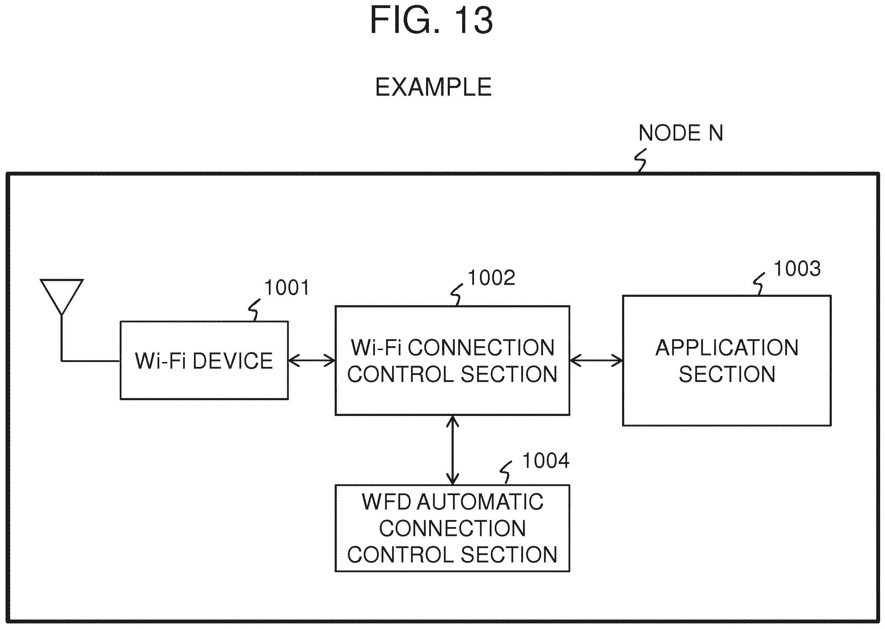

Referring to FIG. 13, a terminal (wireless terminal) according to the present example includes a Wi-Fi device 1001 for performing Wi-Fi communication, a Wi-Fi connection control section 1002, an application section 1003, and a WFD automatic connection control section 1004 that performs automatic connection in accordance with Wi-Fi Direct. Here, the WFD automatic connection control section 1004 corresponds to the user control section 202 and control section 205 in FIGS. 2 and 6 (the control section 205a in FIG. 6). Note that the information storage section 203 described in FIG. 2 is not shown in FIG. 13 but is provided to the terminal in the present example.

In the terminal according to the present example, the WFD automatic connection control section 1004 controls Wi-Fi Direct commands on behalf of an existing communication application. Accordingly, it is possible to automate the control according to Wi-Fi Direct, without modifying the existing application. For example, when wireless terminals come close to each other, they can automatically form a group and implement terminal-to-terminal communication within the group. Moreover, when a new terminal approaches an already established group, the terminal can automatically join the established group. Further, even if already established groups are in proximity to each other, the composition of each group is maintained without changing.

### 5.2) Wi-Fi Direct connection and disconnection flows

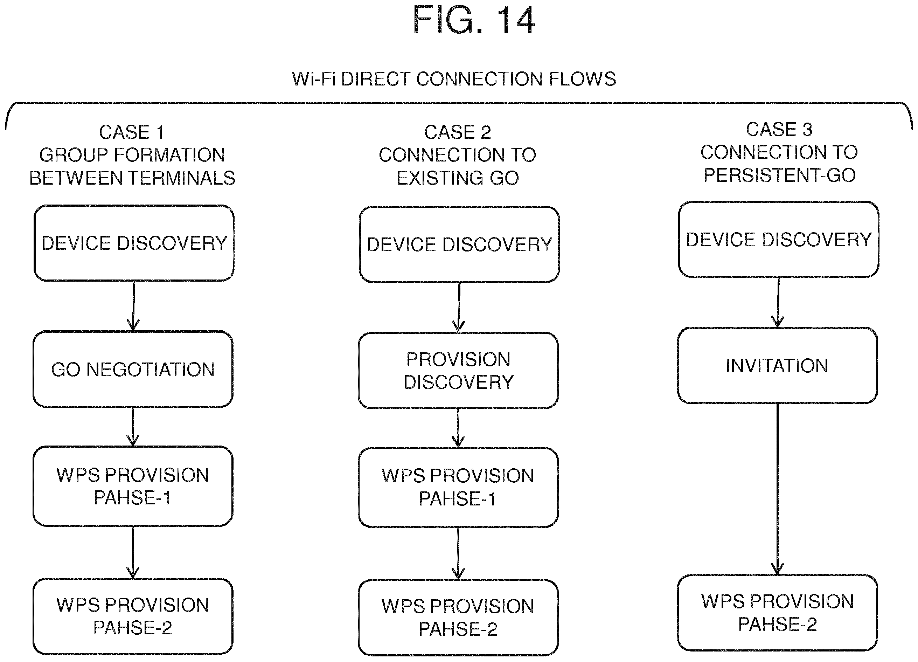

Referring to FIG. 14, in case of forming a group between terminals (CASE 1), first, a terminal searches for a P2P terminal in its vicinity through Device Discovery processing, and when a P2P terminal is discovered, the terminals connect to each other through GO Negotiation processing, with one of them becoming the group owner (GO) and the other becoming a client. Subsequently, WPS Provision Phase-1 (authentication phase) and Phase-2 (encryption phase) are sequentially performed.

In case of connecting to an existing GO (CASE 2), first, a terminal searches for a P2P terminal in its vicinity through Device Discovery processing, and if a discovered P2P terminal is a GO, the terminal connects to this GO through Provision Discovery processing. Subsequently, WPS Provision Phase-1 (authentication phase) and Phase-2 (encryption phase) are sequentially performed.

In case of connecting to a Persistent GO (CASE 3), first, a terminal searches for a P2P terminal in its vicinity through Device Discovery processing, and if a discovered P2P terminal is a Persistent GO, the terminal connects to this Persistent GO through Invitation processing. Subsequently, WPS Provision Phase-1 (authentication phase) and Phase-2 (encryption phase) are sequentially performed.

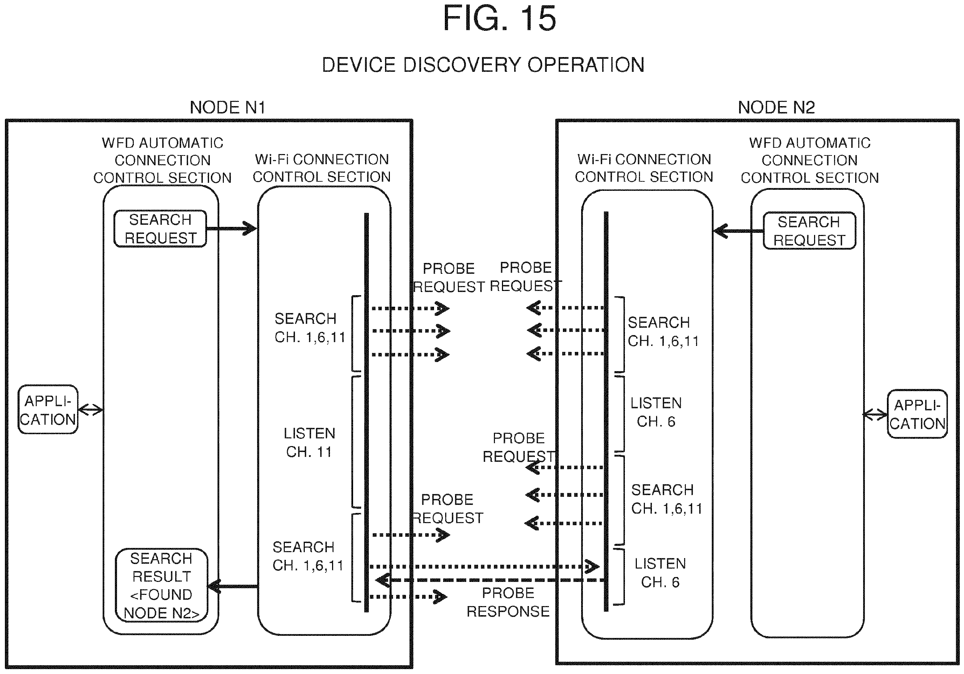

The Device Discovery operation is performed as illustrated in FIG. 15. That is, the Wi-Fi connection control section of each terminal, upon receiving a search request from the WFD automatic connection control section, starts searching for a neighboring terminal and repeats Search state and Listen state alternately. In Search state, the terminal sends out Probe Request while sequentially changing predetermined channels and waits for a response, Probe Response, thereto. In Listen state, the terminal waits for Probe Request from another terminal and, when receiving Probe Request, returns a response, Probe Response, thereto. Assuming that a terminal N1 is a client of a group, the Wi-Fi connection control section of the terminal N1, when receiving Probe Response from a terminal N2, notifies information on this neighboring terminal N2 as neighboring terminal information to the group owner of its own group.

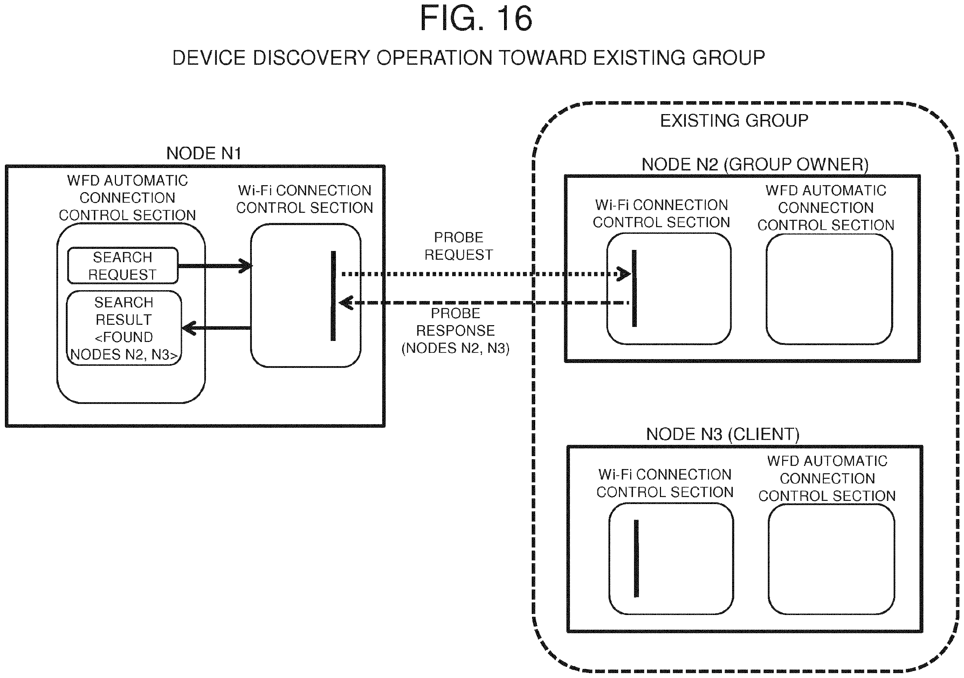

The Device Discovery operation toward an existing GO is performed as illustrated in FIG. 16. If a group is already established with a terminal N2 as its group owner, the GO terminal N2 returns Probe Response to Probe Request from a terminal N1. At that time, P2P Device Info Attribute in the Probe Response from the GO terminal N2 contains a list of clients belonging to this group (here, information on the terminal N2 and a terminal N3).

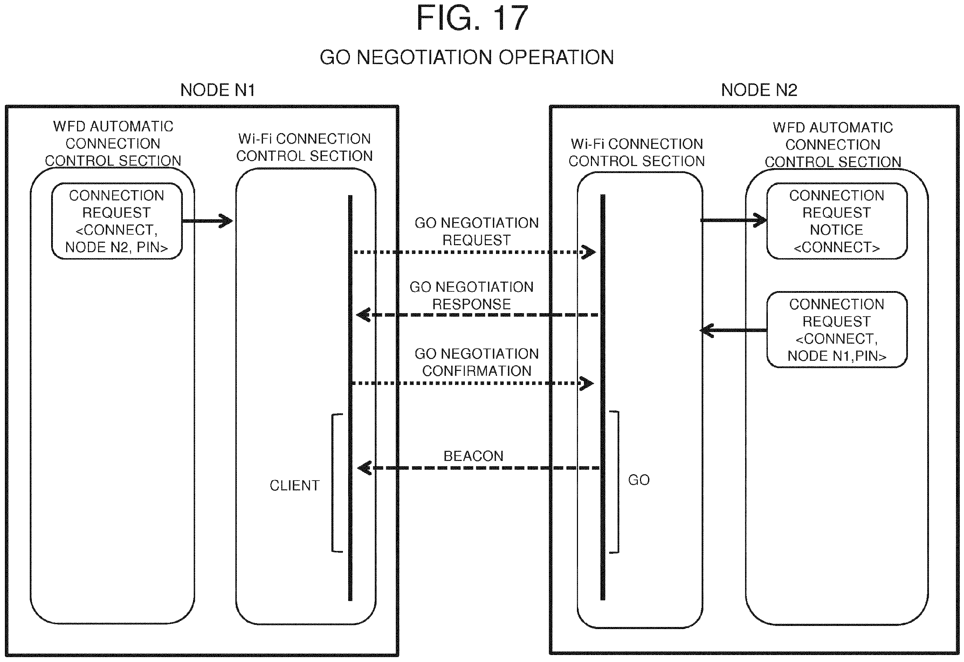

The GO Negotiation operation in case of forming a group between terminals is performed as illustrated in FIG. 17. GO Negotiation Request, GO Negotiation Response, and GO Negotiation Confirmation are sent and received between terminals, whereby one of the terminals becomes a GO and starts broadcasting a beacon.

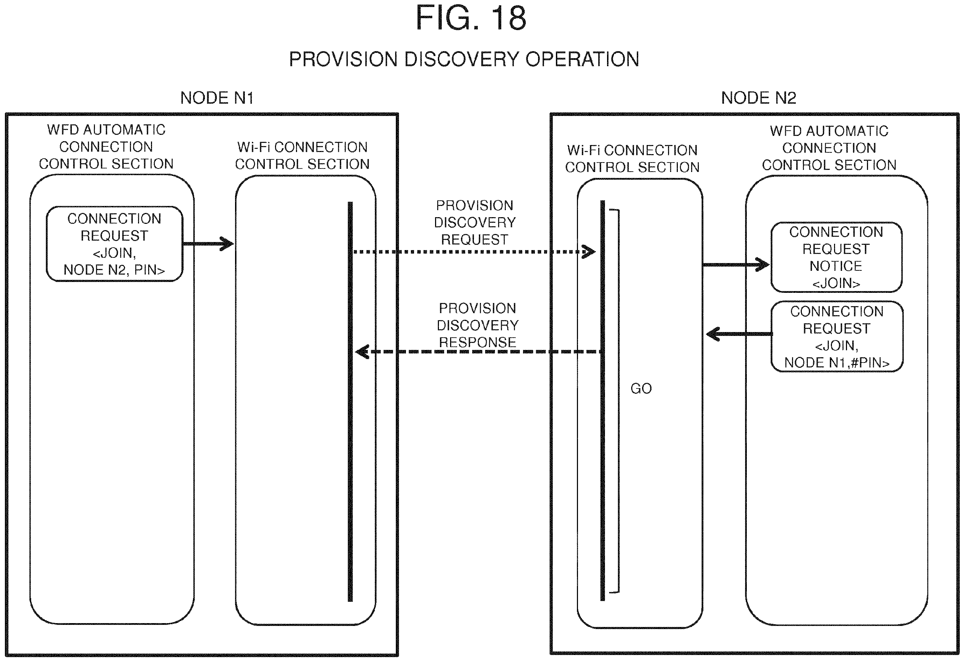

The Provision Discovery operation for connecting to an existing GO is performed as illustrated in FIG. 18. In response to Provision Discovery Request from a terminal N1 to a terminal N2, the GO terminal N2 returns Provision Discovery Response to the terminal N1, whereby the terminal N1 is connected to the terminal N2.

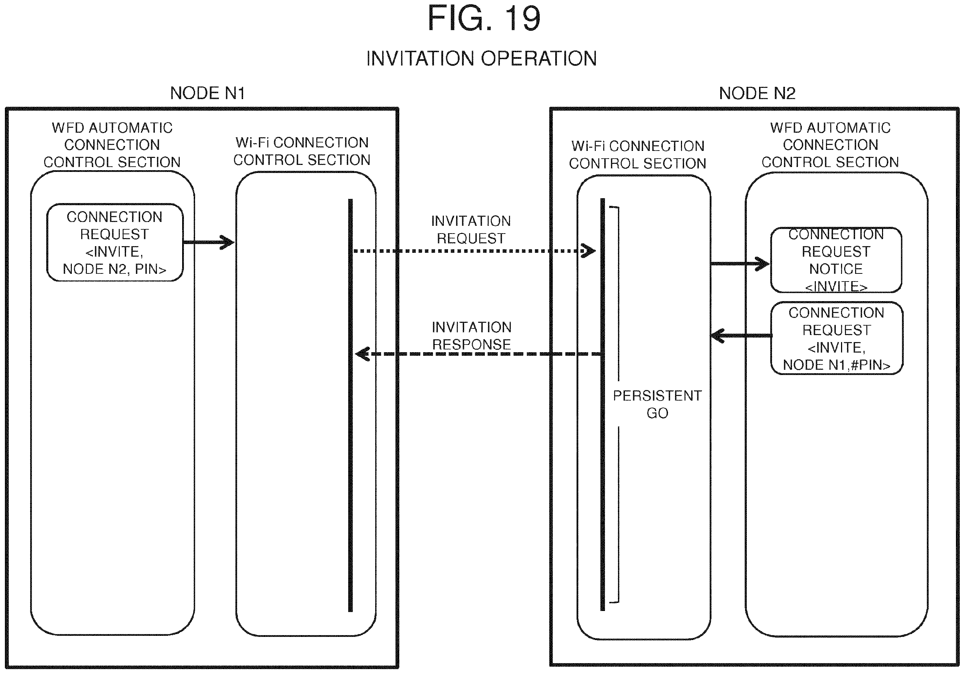

The Invitation operation for connecting to a Persistent-GO is performed as illustrated in FIG. 19. In response to Invitation Request from a terminal N1 to a terminal N2, the Persistent-GO terminal N2 returns Invitation Response to the terminal N1, whereby the terminal N1 is connected to the terminal N2.

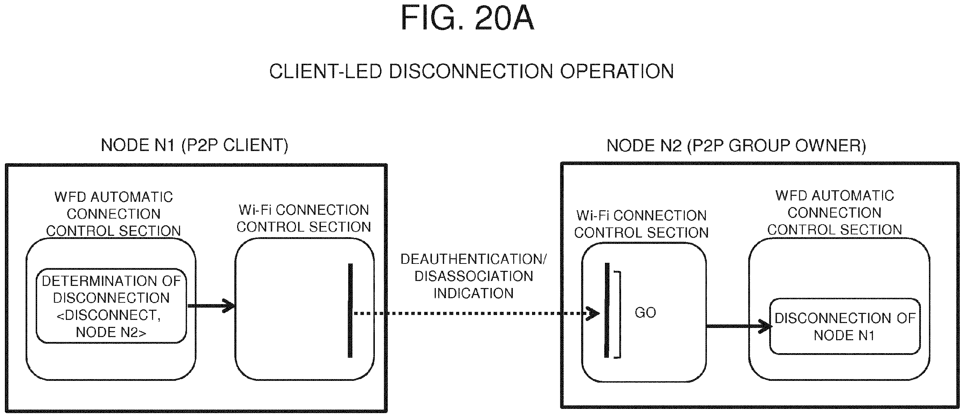

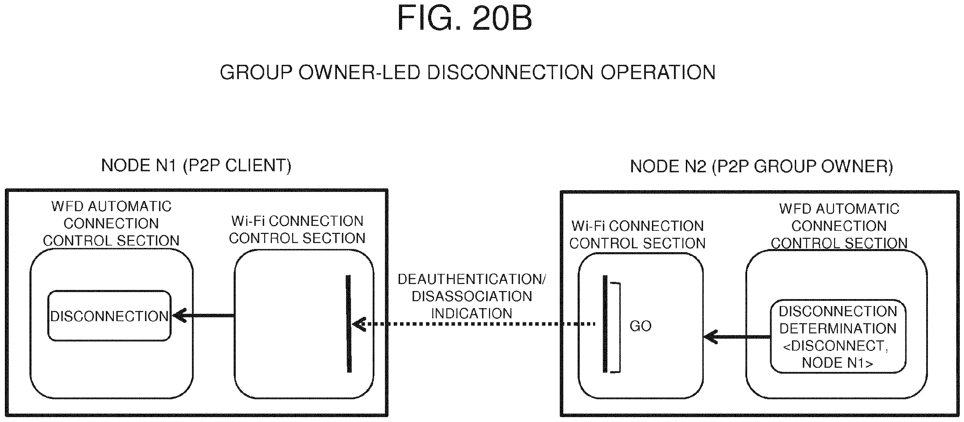

Referring to FIG. 20A, in client-led disconnection, a client terminal N1 sends Deauthentication or Disassociation Indication to a GO terminal N2 and thereby can disconnect therefrom. Conversely, referring to FIG. 20B, in group owner-led disconnection, the GO terminal N2 sends Deauthentication or Disassociation Indication to the client terminal N1 and thereby can disconnect the client.

Through the above-described Wi-Fi connection and disconnection flows, the above-described information sharing methods according to the first to fourth exemplary embodiments of the present invention can be implemented in a Wi-Fi P2P network.

### [Industrial Applicability]

The present invention can be implemented in a P2P network including a plurality of terminals (wireless terminals) that can dynamically form a group.

### [Reference Signs List]

- G, G1-G2: Group
- GO: Group owner
- N, N10-N1m: Terminal
- 201: Wireless communication section
- 202: User control section
- 203: Information storage section
- 204: Program storage section
- 205: Control section

## Claims

1. A wireless terminal (N12) that can form a peer-to-peer group (G1) with another wireless terminal in a wireless communication network, the wireless terminal (N12) comprising:
a first control means configured to operate the wireless terminal (N12) as either an access point or a client node of the group (G1); and
a second control means configured to, when operating as the client, perform operation of searching for a further terminal that is present in vicinity in response to receipt of a search instruction from an owner terminal (N10) that operates as the access point of the group (G1).

2. The wireless terminal (N12) according to claim 1, wherein the second control means performs control such as to disconnect from the group (G1) and perform the search, and thereafter to reconnect to the group (G1).

3. The wireless terminal (N12) according to claim 1 or 2, wherein the second control means shares information on another terminal discovered through the search with other wireless terminals in the group (G1).

4. The wireless terminal (N12) according to any one of claims 1 to 3, wherein the search performed by the second control means is a search of all channels in the wireless communication network.

5. The wireless terminal (N12) according to any one of claims 1 to 3, wherein the search performed by the second control means is a search of a plurality of specified channels in the wireless communication network.

6. The wireless terminal (N12) according to any one of claims 1 to 5, further comprising:
a third control means that is configured to, when operating as the access point, perform search designation by sending a search instruction to at least one of other wireless terminals of the group (G1) to search for a terminal that is present in vicinity,
wherein the third control means selects the at least one other wireless terminal, based on terminal information related to each of the other wireless terminals of the group.

7. The wireless terminal (N12) according to claim 6, wherein the terminal information is at least one of information related to terminals that are present in the vicinity of each of the other wireless terminals and information related to performance of each of the other wireless terminals.

8. The wireless terminal (N12) according to claim 6 or 7, wherein the third control means selects, from among the plurality of other wireless terminals, a plurality of other wireless terminals as a sub-group beforehand and sequentially designates a terminal to perform the operation of searching from the sub-group.

9. The wireless terminal (N12) according to claim 8, wherein the third control means distinguishes the wireless terminals other than those in the sub-group as at least one other sub-group, wherein at least one of a procedure for designating a terminal to perform the operation of searching and a time period of search differs between the sub-group and the other sub-group.

10. A control method for a communication system in a wireless communication network including a plurality of terminals that can form a peer-to-peer group (G1), the method comprising:
at an owner terminal (N10) operating as an access point of the group (G1), selecting at least one of the plurality of terminals and sending a search instruction to the at least one selected terminal (N12); and
at the at least one selected terminal (N12), in response to receipt of the search instruction from the owner terminal (N10), searching for another terminal that is present in vicinity.

11. A control method for a wireless terminal (N10) that can form a peer-to-peer group (G1) with another wireless terminal in a wireless communication network, the method comprising:
when operating as an owner terminal (N10) that operates as an access point of the group,
selecting at least one other wireless terminal (N12) within the group (G1); and
sending a search instruction to the at least one other selected wireless terminal (N12) to search for a further terminal that is present in vicinity.

12. A control method for a wireless terminal (N12) that can form a peer-to-peer group (G1) with another wireless terminal in a wireless communication network, the method comprising:
operating as a client terminal (N12) of the group (G1); and
in response to receipt of a search instruction from an owner terminal (N10) that operates as an access point of the group (G1), performing operation of searching for a further terminal that is present in vicinity.

13. A wireless terminal (N10) that can form a peer-to-peer group (G1) with another wireless terminal (N12) in a wireless communication network, the wireless terminal (N10) comprising:
a first control means configured to operate the wireless terminal (N10) as either an access point or a client node of the group (G1);
a second control means that is configured to, when operating as the access point,
select at least one other wireless terminal (N12) within the group (G1); and
send a search instruction to the at least one other selected wireless terminal (N12) of the group (G1) to search for a further terminal that is present in vicinity.

14. A communication system in a wireless communication network including a plurality of terminals that can form a peer-to-peer group (G1), the system comprising;
an owner terminal (N10) that is the wireless terminal according to claim 13, and
at least one client terminal (N12) according to any one of claims 1 to 5.

## Patentansprüche

1. Drahtloses Endgerät (N12), das eine Peer-to-Peer-Gruppe (G1) mit einem anderen drahtlosen Endgerät in einem drahtlosen Kommunikationsnetzwerk bilden kann, wobei das drahtlose Endgerät (N12) aufweist:
eine erste Steuereinrichtung, die konfiguriert ist, um das drahtlose Endgerät (N12) entweder als einen Zugangspunkt oder einen Client-Knoten der Gruppe (G1) zu betreiben; und
eine zweite Steuereinrichtung, die konfiguriert ist, um, wenn sie als ein Client arbeitet, ansprechend auf den Empfang einer Suchanweisung von einem Besitzerendgerät (N10), das als der Zugangspunkt der Gruppe (G1) arbeitet, den Betrieb zum Suchen nach einem weiteren Endgerät, das in der Nachbarschaft vorhanden ist, durchzuführen.

2. Drahtloses Endgerät (N12) nach Anspruch 1, wobei die zweite Steuereinrichtung die Steuerung derart durchführt durch Trennen von der Gruppe (G1) und Durchführen der Suche und danach wieder Verbinden mit der Gruppe (G1).

3. Drahtloses Endgerät (N12) nach Anspruch 1 oder 2, wobei die zweite Steuereinrichtung Informationen über ein anderes Endgerät, das durch die Suche entdeckt wird, mit anderen drahtlosen Endgeräten in der Gruppe (G1) teilt.

4. Drahtloses Endgerät (N12) nach einem der Ansprüche 1 bis 3, wobei die durch die zweite Steuereinrichtung durchgeführte Suche eine Suche über alle Kanäle in dem drahtlosen Kommunikationsnetzwerk ist.

5. Drahtloses Endgerät (N12) nach einem der Ansprüche 1 bis 3, wobei die durch die zweite Steuereinrichtung durchgeführte Suche eine Suche über mehrere spezifizierte Kanäle in dem drahtlosen Kommunikationsnetzwerk ist.

6. Drahtloses Endgerät (N12) nach einem der Ansprüche 1 bis 5, das ferner aufweist:
eine dritte Steuereinrichtung, die konfiguriert ist, um, wenn sie als der Zugangspunkt arbeitet, eine Suchbestimmung durchzuführen, indem sie eine Suchanweisung an wenigstens eines der anderen drahtlosen Endgeräte der Gruppe (G1) sendet, um nach einem Endgerät zu suchen, das in der Nachbarschaft vorhanden ist,
wobei die dritte Steuereinrichtung das wenigstens eine andere drahtlose Endgerät basierend auf Endgerätinformationen sucht, die jedes der anderen drahtlosen Endgeräte der Gruppe betreffen.

7. Drahtloses Endgerät (N12) nach Anspruch 6, wobei die Endgerätinformation wenigstens eine Information, welche Endgeräte, die in der Nachbarschaft jedes der anderen drahtlosen Endgeräte vorhanden sind, betrifft, oder eine Information bezüglich der Leistung jedes der anderen drahtlosen Endgeräte ist.

8. Drahtloses Endgerät (N12) nach Anspruch 6 oder 7, wobei die dritte Steuereinrichtung im Voraus aus den mehreren anderen drahtlosen Endgeräten mehrere andere drahtlose Endgeräte als eine Teilgruppe auswählt und nacheinander ein Endgerät aus der Teilgruppe bestimmt, um den Suchbetrieb durchzuführen.

9. Drahtloses Endgerät (N12) nach Anspruch 8, wobei die dritte Steuereinrichtung die drahtlosen Endgeräte außer denen in der Teilgruppe als wenigstens eine andere Teilgruppe unterscheidet, wobei ein Verfahren zum Bestimmen eines Endgeräts für das Durchführen des Suchbetriebs oder eine Suchzeitspanne sich zwischen der Teilgruppe und der anderen Teilgruppe unterscheiden.

10. Steuerverfahren für ein Kommunikationssystem in einem drahtlosen Kommunikationsnetz, das mehrere Endgeräte umfasst, die eine Peer-to-Peer-Gruppe (G1) bilden können, wobei das Verfahren aufweist:
ein Besitzerendgerät (N10), das als ein Zugangspunkt der Gruppe (G1) arbeitet, das wenigstens eines der mehreren Endgeräte auswählt und eine Suchanweisung an das wenigstens eine ausgewählte Endgerät (N12) sendet; und
ansprechend auf den Empfang der Suchanweisung von dem Besitzerendgerät (N10), Suchen nach einem weiteren Endgerät, das in der Nachbarschaft vorhanden ist, durch das wenigstens eine ausgewählte Endgerät (N12).

11. Steuerverfahren für ein drahtloses Endgerät (N10), das eine Peer-to-Peer-Gruppe (G1) mit einem anderen Endgerät in einem drahtlosen Kommunikationsnetzwerk bilden kann, wobei das Verfahren aufweist:
wenn das Endgerät als ein Besitzerendgerät (N10) arbeitet, das als ein Zugangspunkt der Gruppe arbeitet,
Auswählen wenigstens eines anderen drahtlosen Endgeräts (N12) innerhalb der Gruppe (G1); und
Senden einer Suchanweisung an das wenigstens eine andere ausgewählte Endgerät (N12), um ein weiteres Endgerät zu suchen, das in der Nachbarschaft vorhanden ist.

12. Steuerverfahren für ein drahtloses Endgerät (N12), das eine Peer-to-Peer-Gruppe (G1) mit einem anderen drahtlosen Endgerät in einem drahtlosen Kommunikationsnetzwerk bilden kann, wobei das Verfahren aufweist:
Arbeiten als ein Client-Endgerät (N12) der Gruppe (G1); und
ansprechend auf den Empfang einer Suchanweisung von einem Besitzerendgerät (N10), das als ein Zugangspunkt der Gruppe (G1) arbeitet, Durchführen des Suchbetriebs nach einem weiteren Endgerät, das in der Nachbarschaft vorhanden ist.

13. Drahtloses Endgerät (N10), das eine Peer-to-Peer-Gruppe (G1) mit einem anderen drahtlosen Endgerät (N12) in einem drahtlosen Kommunikationsnetzwerk bilden kann, wobei das drahtlose Endgerät (N10) aufweist:
eine erste Steuereinrichtung, die konfiguriert ist, um das drahtlose Endgerät (N10) entweder als einen Zugangspunkt oder als einen Client-Knoten der Gruppe (G1) zu betreiben;
eine zweite Steuereinrichtung, die konfiguriert ist, um, wenn sie als ein Zugangspunkt arbeitet, wenigstens ein anderes drahtloses Endgerät (N12) in der Gruppe (G1) auszuwählen; und
eine Suchanweisung an das wenigstens eine andere ausgewählte drahtlose Endgerät (N12) der Gruppe (G1) zu senden, um eine Suche nach einem weiteren Endgerät, das in der Nachbarschaft vorhanden ist, durchzuführen.

14. Kommunikationssystem in einem drahtlosen Kommunikationsnetzwerk, das mehrere Endgeräte, die eine Peer-to-Peer-Gruppe (G1) bilden können, umfasst, wobei das System aufweist:
ein Besitzerendgerät (N10), welches das drahtlose Endgerät nach Anspruch 13 ist, und
wenigstens ein Client-Endgerät (N12) nach einem der Ansprüche 1 bis 5.

## Revendications

1. Terminal sans fil (N12) qui peut former un groupe poste-à-poste (G1) avec un autre terminal sans fil dans un réseau de communication sans fil, le terminal sans fil (N12) comprenant :
un premier moyen de commande configuré pour faire fonctionner le terminal sans fil (N12) soit en tant que point d'accès soit en tant que nœud client du groupe (G1) ; et
un deuxième moyen de commande configuré pour, lorsqu'il fonctionne en tant que client, réaliser une opération de recherche d'un terminal supplémentaire qui est présent à proximité en réponse à une réception d'une instruction de recherche en provenance d'un terminal propriétaire (N10) qui fonctionne en tant que point d'accès du groupe (G1).

2. Terminal sans fil (N12) selon la revendication 1, dans lequel le deuxième moyen de commande réalise une commande de façon à se déconnecter du groupe (G1) et réaliser la recherche, et ensuite se reconnecter au groupe (G1).

3. Terminal sans fil (N12) selon la revendication 1 ou 2, dans lequel le deuxième moyen de commande partage des informations sur un autre terminal découvert par le biais de la recherche avec d'autres terminaux sans fil du groupe (G1).

4. Terminal sans fil (N12) selon l'une quelconque des revendications 1 à 3, dans lequel la recherche réalisée par le deuxième moyen de commande est une recherche de tous les canaux dans le réseau de communication sans fil.

5. Terminal sans fil (N12) selon l'une quelconque des revendications 1 à 3, dans lequel la recherche réalisée par le deuxième moyen de commande est une recherche d'une pluralité de canaux spécifiés dans le réseau de communication sans fil.

6. Terminal sans fil (N12) selon l'une quelconque des revendications 1 à 5, comprenant en outre :
un troisième moyen de commande qui est configuré pour, lorsqu'il fonctionne en tant que point d'accès, réaliser une désignation de recherche en envoyant une instruction de recherche à au moins l'un d'autres terminaux sans fil du groupe (G1) pour rechercher un terminal qui est présent à proximité,
dans lequel le troisième moyen de commande sélectionne l'au moins un autre terminal sans fil, sur la base d'informations de terminal liées à chacun des autres terminaux sans fil du groupe.

7. Terminal sans fil (N12) selon la revendication 6, dans lequel les informations de terminal sont au moins l'une parmi des informations liées à des terminaux qui sont présents à proximité de chacun des autres terminaux sans fil et des informations liées à la performance de chacun des autres terminaux sans fil.

8. Terminal sans fil (N12) selon la revendication 6 ou 7, dans lequel le troisième moyen de commande sélectionne, parmi la pluralité d'autres terminaux sans fil, une pluralité d'autres terminaux sans fil en tant que sous-groupe au préalable et désigne séquentiellement un terminal pour réaliser l'opération de recherche depuis le sous-groupe.

9. Terminal sans fil (N12) selon la revendication 8, dans lequel le troisième moyen de commande distingue les terminaux sans fil autres que ceux dans le sous-groupe en tant qu'au moins un autre sous-groupe, dans lequel au moins l'une d'une procédure de désignation d'un terminal pour réaliser l'opération de recherche et d'une période de temps de recherche diffère entre le sous-groupe et l'autre sous-groupe.

10. Procédé de commande pour un système de communication dans un réseau de communication sans fil incluant une pluralité de terminaux qui peuvent former un groupe poste-à-poste (G1), le procédé comprenant :
au niveau d'un terminal propriétaire (N10) fonctionnant en tant que point d'accès du groupe (G1), la sélection d'au moins l'un de la pluralité de terminaux et l'envoi d'une instruction de recherche à l'au moins un terminal sélectionné (N12) ; et
au niveau de l'au moins un terminal sélectionné (N12), en réponse à la réception de l'instruction de recherche en provenance du terminal propriétaire (N10), la recherche d'un autre terminal qui est présent à proximité.

11. Procédé de commande pour un terminal sans fil (N10) qui peut former un groupe poste-à-poste (G1) avec un autre terminal sans fil dans un réseau de communication sans fil, le procédé comprenant :
lorsqu'il fonctionne en tant que terminal propriétaire (N10) qui fonctionne en tant que point d'accès du groupe,
la sélection d'au moins un autre terminal sans fil (N12) au sein du groupe (G1) ; et
l'envoi d'une instruction de recherche à l'au moins un autre terminal sans fil sélectionné (N12) pour rechercher un terminal supplémentaire qui est présent à proximité.

12. Procédé de commande pour un terminal sans fil (N12) qui peut former un groupe poste-à-poste (G1) avec un autre terminal sans fil dans un réseau de communication sans fil, le procédé comprenant :
le fonctionnement en tant que terminal client (N12) du groupe (G1) ; et
en réponse à la réception d'une instruction de recherche en provenance d'un terminal propriétaire (N10) qui fonctionne en tant que point d'accès du groupe (G1), la réalisation d'une opération de recherche d'un terminal supplémentaire qui est présent à proximité.

13. Terminal sans fil (N10) qui peut former un groupe poste-à-poste (G1) avec un autre terminal sans fil (N12) dans un réseau de communication sans fil, le terminal sans fil (N10) comprenant :
un premier moyen de commande configuré pour faire fonctionner le terminal sans fil (N10) soit en tant que point d'accès soit en tant que nœud client du groupe (G1) ;
un deuxième moyen de commande qui est configuré pour, lorsqu'il fonctionne en tant que point d'accès, sélectionner au moins un autre terminal sans fil (N12) au sein du groupe (G1) ; et
envoyer une instruction de recherche à l'au moins un autre terminal sans fil sélectionné (N12) du groupe (G1) pour rechercher un terminal supplémentaire qui est présent à proximité.

14. Système de communication dans un réseau de communication sans fil incluant une pluralité de terminaux qui peuvent former un groupe poste-à-poste (G1), le système comprenant :
un terminal propriétaire (N10) qui est le terminal sans fil selon la revendication 13, et
au moins un terminal client (N12) selon l'une quelconque des revendications 1 à 5.
